# EUROPEAN PATENT SPECIFICATION

(11) **EP 2 500 495 B1**
(45) Date of publication and mention of the grant of the patent: **07.05.2014**
(21) Application number: 11158156.7
(22) Date of filing: 14.03.2011
(51) Int. Cl.: E05D 5/02

(54) **Hinge module, hinge assembly and roll container**
Scharniermodul, Scharnieranordnung und Rollenbehälter
Module à charnière, ensemble formant charnière et conteneur de rouleaux

(43) Date of publication of application: 19.09.2012
(73) Proprietor: K. Hartwall Oy AB, 01150 Söderkulla (FI)
(72) Inventor: Lindström, Johan, 01150, Söderkulla (FI); Järvi, Mikko, 01150, Söderkulla (FI); Hartwall, John, 01150, Söderkulla (FI)
(74) Representative: Ahlskog, Tatu Kari Petteri

(56) References cited:
- EP-A2- 1 353 030
- US-A- 5 167 049

## Description

### Field of the invention

The present invention relates to roll containers. Particularly the invention relates to hinges for folding a roll container. More specifically, the present invention relates to a hinge module, hinge assembly and roll container according to the preamble portions of claims 1, 9 and 13.

### Background art

Roll containers are a popular means of moving and temporary storing of goods. Roll containers comprise a chassis, which is fitted with fixed and swivel castors, a vertical back and side frame section. There is a variety of different types of roll containers, but a nesting type has achieved great popularity. A particularly popular type of a nesting roll container is a roll container, which has an A-shaped chassis in plan view. The back frame section of the container consists of two panels, which are hinged to each other and to the side frame sections for folding the container. The A-frame chassis roll containers also comprise a liftable floor, which is hinged to either side wall sections of the container so that the floor can be in a horizontal position, wherein it is able to receive and provide support for the contents of the container, or in a vertical position, wherein it is folded parallel to the side frame section for accommodating efficient nesting. When the container is empty and not needed for transport of objects, the floor is lifted up parallel to the side frame section and the rear wall sections are folded inwards.

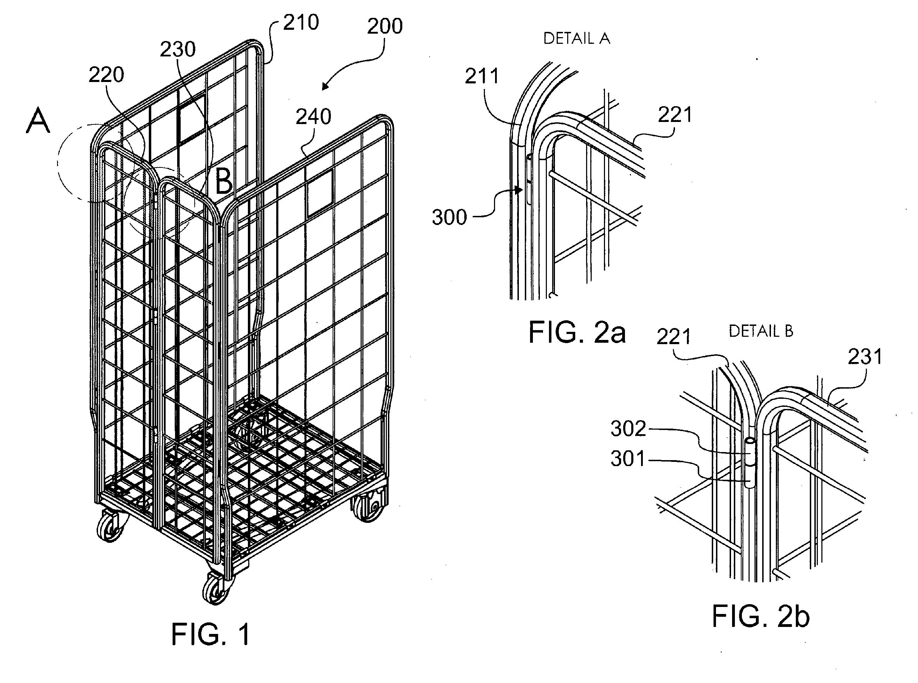

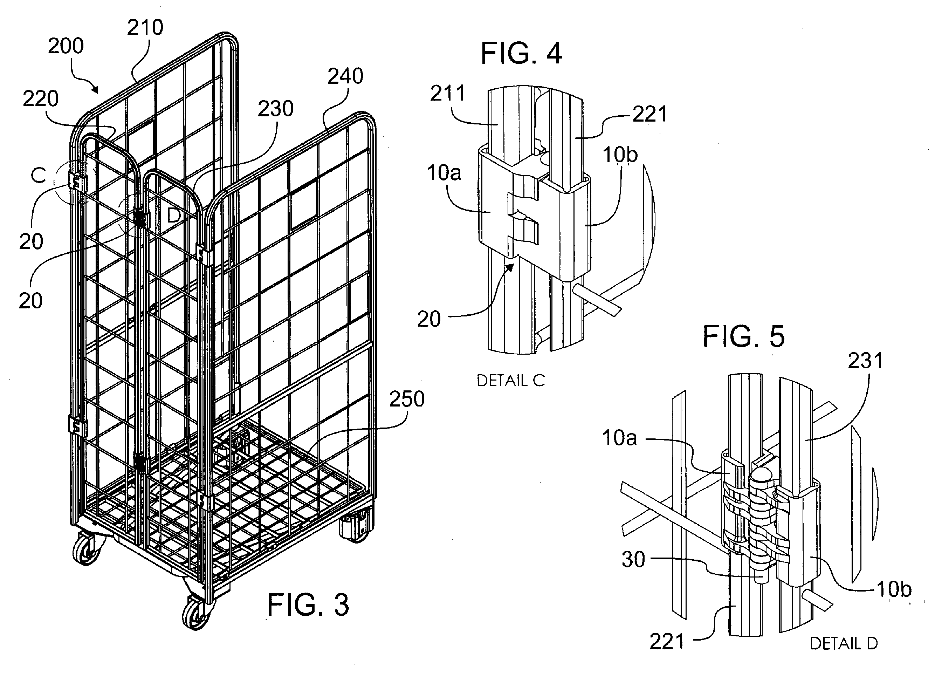

Such roll containers are described in the European standard for roll containers EN12674-1, particularly in figures 5a and 5b thereof, and illustrated in Figs. 1, 2a and 2b of the accompanying drawings.

As mentioned above and referring to Figs. 1, 2a and 2b of the accompanying drawings, traditional foldable A-frame roll containers 200 feature hinges 300 for pivoting rear wall sections 220, 230 to each other and for pivoting the rear wall sections 220, 230 to the adjacent side wall sections 210, 240. Such conventional hinges typically feature a first bushing 301, which is connected to a side wall section 210, 240 and a matching second bushing 302 connected to a lateral rear wall section 220, 230. The bushings 301, 302 are coupled together by a pin (not shown) inserted through aligned openings of the bushings. A similar hinge 300 was also provided between adjacent rear wall sections 220, 230, whereby the roll container 200 could be pivoted to a folded configuration (not shown).

EP 1353030 A2 discloses a hinge which comprises a bobbin and an arm. The bobbin has a cylindrical portion and a peripheral flange at each end of the cylindrical portion. The bobbin is formed with two parts which are split longitudinally with internal surfaces enabling the bobbin to be fixed around a rectangular-section frame member. The arm comprises a first bore which is rotatable round the cylindrical portion of the bobbin and a second bore which is parallel to the first bore and in which a round-section frame member can rotate. The arm is split between the two bores beyond at least one of the bores in a plane containing the axes of the bores enabling the arm to be assembled around the bobbin and a round-section frame member. The arm comprises holes intermediate to the bores and perpendicular to the said plane for securing the arm on the bobbin and the round-section frame member.

There are, however, certain disadvantages associated with conventional hinge connections of such folding and nesting roll containers. Roll container parts are typically manufactured by welding, whereby the container is assembled from welded components. As each wall section forms such a component, it is important that the cooperating parts of the hinge, i.e. pin and bushing, in adjacent wall sections are accurately aligned. This makes the manufacturing of such roll containers rather cumbersome, as rather large welded pieces require tight manufacturing tolerances especially in positioning accuracy. It is particularly difficult to align the frame sections of the roll container accurately enough for welding the hinges. There is also a further disadvantage relating to welding is welding distortion, wherein the heat affected zone of the wall section frame profile warps upon welding. This deformation impedes accurate positioning of the hinged wall sections.

### Aim of the Invention

The aim of the invention is therefore to mitigate at least some of the drawbacks relating to conventional hinges and to provide an improved module, hinge assembly and roll container.

### Summary

According to one aspect of the invention, the aim may be achieved with a novel hinge module for pivoting roll container wall sections having a frame profile. The novel hinge module comprises a first portion having a hole for receiving a hinge pin. The hinge module also comprises a sheet-like second portion, which is connected to the first portion and which is made of elastic material capable of being wrapped around the frame profile such to be shaped to an enfolding configuration to provide a cavity for receiving a frame profile. The hinge module further comprises a third portion, which is connected to the second portion to an end thereof opposing the first portion and which has a corresponding hole for receiving a hinge pin as that of the first portion. The first and third portion are adapted to cooperate such that, when the second portion is shaped to provide the cavity, the holes of the first and third portion are aligned in parallel to the cavity for receiving the hinge pin. The hinge module is further shaped such that holes of the first and third portion of another module, which is arranged in an inverted orientation to the first one, are aligned with those of the first module, wherein said another module can be arranged along the same hinge pin.

More specifically the hinge module according to the present invention is characterized by what is stated in claim 1.

According to another aspect of the invention, the aim may be achieved with a novel hinge assembly for pivoting roll container wall sections having a frame profile. The hinge assembly comprises at least two invertedly arranged cooperating hinge modules according to claim 1.

More specifically the hinge assembly according to the present invention is characterized by what is stated in claim 9.

According to yet another aspect of the invention, the aim may be achieved with a novel roll container, which comprises two side wall sections, which are spaced apart, and at least two rear wall sections, which are arranged between the side wall sections. The roll container also comprises hinges adapted to pivotally connect the side wall sections and rear wall sections to each other so that the roll container is foldable for nesting a plurality of similar roll containers. The hinges are provided by hinge assemblies according to claim 9, which are connected by a hinge pin penetrating the aligned holes of the modules thereof.

More specifically, the roll container according to the present invention is characterized by what is stated in the characterizing portion of claim 13.

Considerable benefits are gained with aid of the present invention. As the hinge assembly is formed with modular hinge components that can be snapped onto wall section frame profiles, there is no need to weld hinge components accurately to said frame profiles. Instead, hinges are assembled without welding, whereby positioning accuracy in the welding process may be reduced making it easier to manufacture said large wall sections.

Because the hinge module can be retrofitted, the wall sections may be manufactured separately from hinging elements to that no additional parts have to be introduced to the roll container. Therefore modularity is improved in the roll container itself.

Furthermore, a broken hinge is also easily replaceable without any need for welding improving maintainability of the entire roll container.

On the other hand, a hinge module according to a preferable embodiment of the invention described here after ensures that a rear wall section cannot be removed without braking hinge module, whereby safety seal is provided.

According to one embodiment, the hinge module is made of plastic. This prevents adjacent wall sections from engaging, which makes the roll container quieter.

According to another embodiment, the hinge module is shaped so that the cooperating modules of a hinge assembly cannot be pivoted beyond a certain angle, which provides a travel stop function. Consequently, the rear wall sections, for example, may not be pushed outwards, whereby the roll container maintains its form even under heavy handling during loading the container.

### Brief description of drawings

In the following, certain embodiments of the present invention are described in greater detail with reference to the accompanying drawings, in which:
Fig. 1 presents an isometric view of a roll container according to prior art,
Fig. 2a presents a detail view (A) of a hinge connecting a side frame section to a rear wall section of Fig. 1,
Fig. 2b presents a detail view (b) of a hinge connecting two rear wall sections of Fig. 1 to each other,
Fig. 3 presents an isometric view of a roll container according to an embodiment of the present invention in an operational configuration,
Fig. 4 presents a detail view (C) of a hinge connecting a side frame section to a rear wall section of Fig. 3,
Fig. 5 presents a detail view (D) of another hinge connecting two rear wall sections of Fig. 3 to each other,
Fig. 6 presents an isometric view of the roll container of Fig. 3 in a folded configuration,
Fig. 7 presents a detail view (C) of a hinge connecting a side frame section to a rear wall section of Fig. 6,
Fig. 8 presents a detail view of another hinge connecting two rear wall sections of Fig. 3 to each other,
Fig. 9 presents an isometric view of a hinge module according to one embodiment of the invention in an enfolded configuration,
Fig. 10 presents a bottom elevation view of the hinge module of Fig. 9,
Fig. 11 presents another isometric view of the hinge module of Fig. 9,
Fig. 12 presents an isometric view of the hinge module of Fig. 9 in an opened configuration,
Fig. 13 presents a bottom elevation view of the hinge module of Fig. 12,
Fig. 14 presents an isometric view of a hinge according to an embodiment of the invention comprising two hinge modules dimensioned for different frame profile sizes as well as a hinge pin, the hinge being in an operational configuration,
Fig. 15 presents an axial elevation view of the hinge of Fig. 14,
Fig. 16 presents an isometric view of the hinge of Fig. 14 in a folded configuration,
Fig. 17 presents an axial elevation view of the hinge of Fig. 16,
Fig. 18 presents a detail view of the first portion of the hinge module of Fig. 12,
Fig. 19 presents a detail view of the third portion of the hinge module of Fig. 12, and
Fig. 20 presents a side elevation view showing the cooperation of the first and second portion of the hinge module of Fig. 11.

### Detailed description of preferred embodiments

As shown in Figs. 1, 2a and 2b, traditional foldable roll containers 200 featured hinges 300 having a first bushing 301 connected to a side wall section 210, 240 and a matching second bushing 302 connected to a lateral rear wall section 220, 230. The wall sections comprise a quadrilateral frame profile within which a mesh has been provided. The bushings 301, 302 are coupled together by a pin (not shown) inserted through aligned holes of the bushings. A similar hinge 300 was also provided between adjacent rear wall sections 220, 230, whereby the roll container 200 could be pivoted to a folded configuration (not shown).

By contrast the present invention provides means for arranging hinged connection for the rear wall sections 220, 230 of a roll container 200. In operational configuration (Fig. 3), the side walls 210, 240 of the roll container 200 are parallel and connected by two aligned rear wall sections 220, 230. Hinge assemblies 20 are provided between the side wall sections 210, 240 and rear wall sections 220, 230 as well as between the two rear wall sections 220, 230.

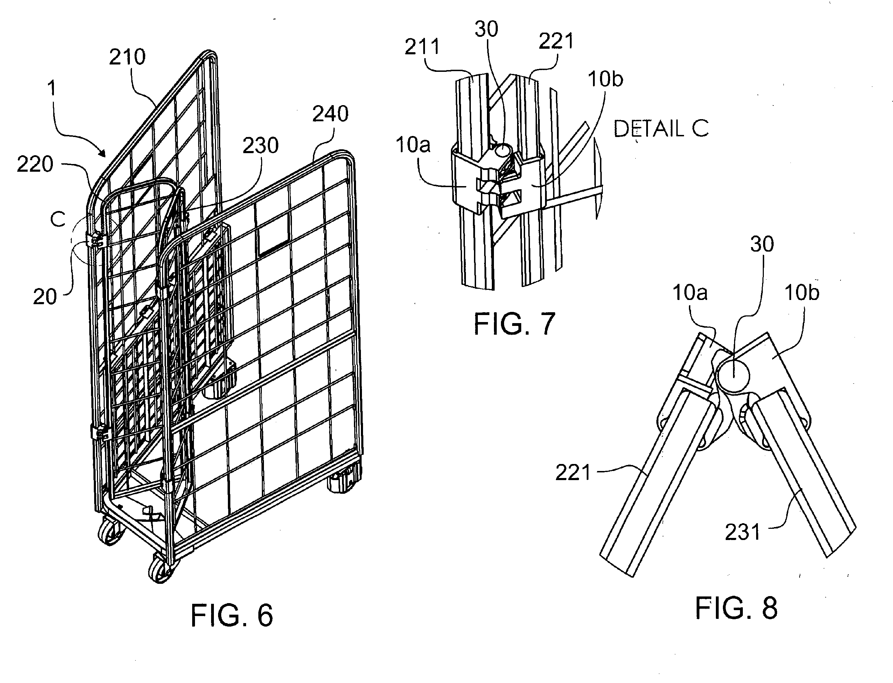

Fig. 4 illustrates the connection between first side wall section 210 and first rear wall section 220. A hinge is provided there between by arranging a first hinge module 10a around the frame profile 211 of the first side wall section 210, a second hinge module 10b around the frame profile 221 of the first rear wall section 220, and by arranging a hinge pin 30 (not shown) to connect the first and second hinge modules 10a, 10b. Fig. 7 shows the same hinge articulated to accommodate the folded configuration of the roll container 200 (Fig. 6). In this particular example, the frame profile 211 of the first side wall section 210 is 22 x 22 mm and frame profile 221 of the first rear wall section 220 is 15 x 15 mm. The first hinge module 10a is therefore adapted to receive a frame profile having 22 x 22 mm dimensions and the second hinge module 10b is adapted to receive a frame profile having 15 x 15 mm dimensions. As seen from figs. 3 and 6, the first side wall section 210 and first rear wall section 220 are connected by two superposed hinges arranged as described above. Similar hinges are also provided to connect the second rear wall section 230 and second side wall section 240. These hinge assemblies 20 are asymmetric in the sense that the first and second hinge module 10a, 10b are adapted to receive frame profiles of different size. Also symmetric hinge assemblies 20 are possible as described in the following.

Fig. 5 illustrates the connection between the first rear wall section 220 and the second rear wall section 230. Since the rear wall sections 220, 230 have similar frame profiles, a symmetric hinge assembly 20 there between is provided with similar hinge modules 10a, 10b. A hinge is therefore provided by arranging a first hinge module 10a around the frame profile 221 of the first rear wall section 220, a second similar hinge module 10b around the frame profile 231 of the second rear wall section 230, and by arranging a hinge pin 30 to connect the first and second hinge modules 10a, 10b. Fig. 8 shows the same hinge articulated to accommodate the folded configuration of the roll container 200 (Fig. 6). In this example, the frame profiles 221, 231 of the first and second rear wall sections 220, 230 are 15 x 15 mm. Both the first and second hinge modules 10a, 10b are therefore adapted to receive a frame profile 15 x 15 mm dimensions. As seen from figs. 3 and 6, the rear wall sections 220, 230 are connected by two superposed hinges arranged as described above.

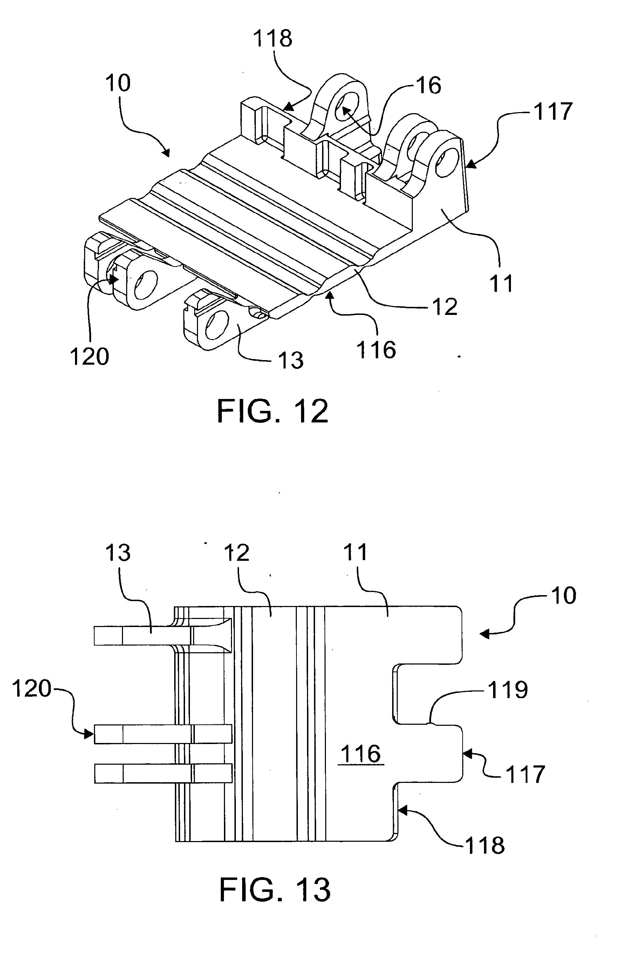

The hinge module 10 can be manufactured by suitable type of casting to create a one piece module as shown in Fig. 12. According to a particular embodiment, the module 10 is injection molded from polypropylene, polyamide, elastomers or other formable polymers. Hinge module 10 could also be made by combining components, which is however not advisable since connections between components create points of discontinuity, which impede the mechanical integrity of the module.

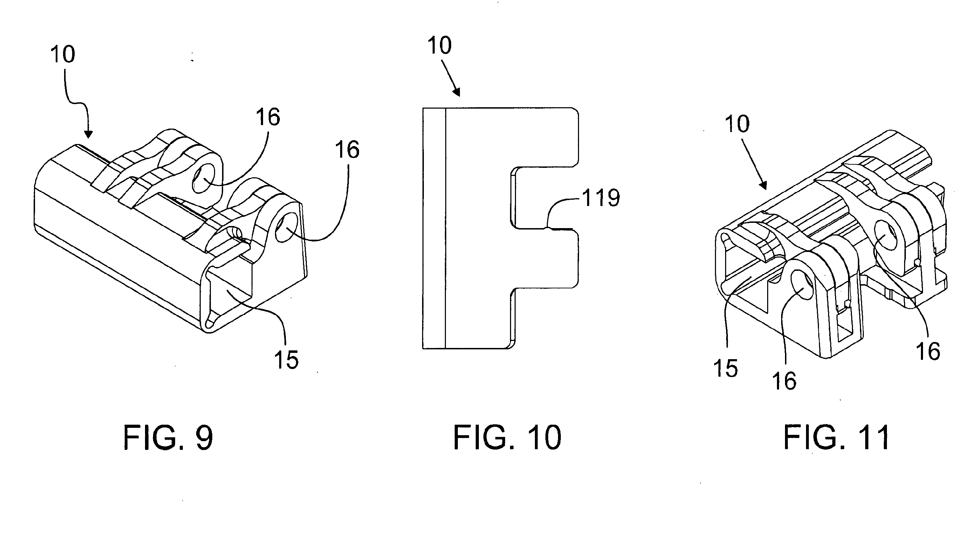

Referring yet to Fig. 12, which illustrates a hinge module 10 in an opened configuration according to one embodiment of the invention. The hinge module 10 comprises a first portion 11, which has a hole 16 for receiving a hinge pin 30. A sheet-like second portion 12 is connected to the first portion 11 at one end. The second portion 12 is adapted to be shaped to an enfolding position to provide a cavity 15 for receiving a frame profile. The frame profile is preferably non-circular (cf. Figs. 9 and 11), such as quadratic, quadrilateral, triangular, ellipse or octagonal. The non-circular frame profile provides a form fitting function, whereby the frame profile does not rotate within the cavity 15. Alternatively, the portion 12 is adapted to receive a circular frame profile, whereby the frame profile must be locked to the module 10 with suitable means such as adhesive or with a penetrative transversal locking pin (not shown). Hence, the non-circular frame profile is discussed here after as a preferable option.

The second portion 12 may adapted to be shaped in various ways. According to the embodiment shown in Fig. 12, the inner surface of the second portion 12 has been provided with grooves for aiding with the shaping motion. Alternatively or additionally, the material of the hinge module 10 is selected from sufficiently elastic materials, such as different plastics.

The hinge module 10 further comprises a third portion 13 connected to the second portion 12 to an end thereof opposing the first portion 11. The third portion 13 has a corresponding hole 16 as that of the first portion 11 for receiving a hinge pin 30. The first and third portion 11, 13 are adapted to cooperate such that, when the second portion 12 is shaped to provide the cavity 15 for the frame profile, the holes 16 of the first and third portion 11, 13 are aligned in parallel to the cavity 15 (Figs. 9 to 11).

According to a particular embodiment, the second portion 12 is manufactured from an elastomer and the first and third portions 11, 13 are manufactured from another stiffer material. For example, the module 10 can be manufactured by component injection molding, wherein the second portion 12 molded into the first and third portions 11, 13, which are provided to the mold as inserts. With said arrangement, the second portion 12 may be of an elastic material capable of being wrapped around the frame profile while the first and third portions 11,13 can be made as rigid as possible.

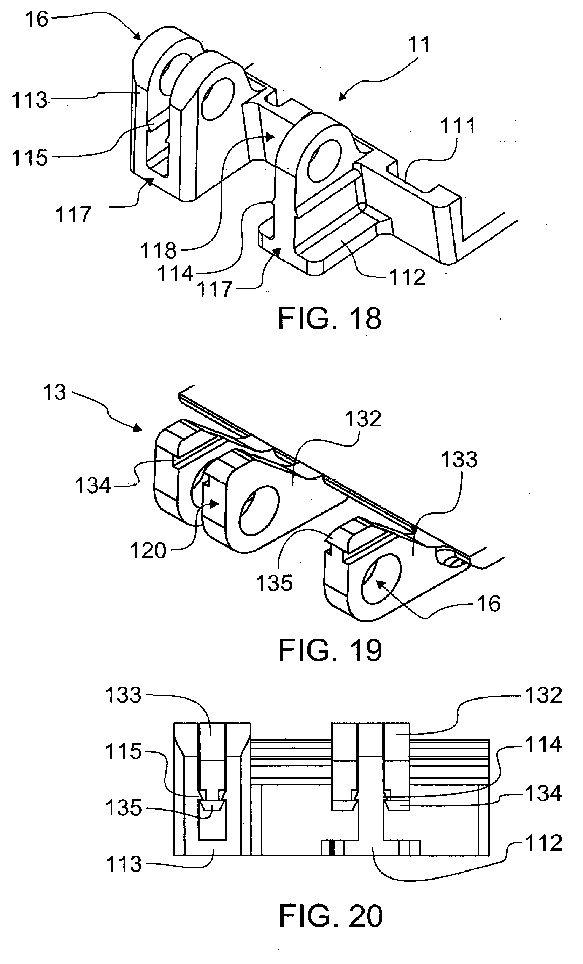

In the following the design principles of the above embodiment are discussed in greater detail with particular reference to Figs. 18 to 20. The first portion 11 (Fig. 18) comprises a tab member 112, which protrudes from an enfolding portion 111, which may also be considered to be part of a pre-shaped second portion 12. The inner surface of the enfolding portion 111 is intended to engage with the frame profile and the outer surface is intended to accommodate the protuberances of the first portion 11. The tab member 112 is provided with said a hole 16 for receiving the common hinge pin 30 as well as a male coupling ridge 114 designed to couple with a corresponding female coupling groove 134 described here after. The first portion 11 also comprises a slot member 113. The slot member 113 is provided with a hole 16, which is coaxial and dimensionally matching to that of the tab member 112 for receiving the common hinge pin 30. The slot member 113 is also provided with a female coupling ridge 115 designed to couple with a corresponding male coupling ridge 135 described here after.

The third portion 13, which is arranged to the other end of the second portion 12, comprises a tab member 133, which is designed to engage with the slot member 115 of the first portion 11, when the second portion 12 is shaped to an enfolding position to provide a cavity 15 for receiving a frame profile, preferably a non-circular frame profile. The tab member 133 therefore comprises a male coupling ridge 135, which is designed to couple to the female coupling ridge 115 of the slot member 113 of the first portion 11 by geometrical locking. The tab member 133 of the third portion 13 also comprises a hole 16 for receiving the common hinge pin 30.

The third portion 13 further comprises a slot member 132, which is designed to engage with the tab member 112 of the first portion 11, when the second portion 12 is shaped to an enfolding position to provide a cavity 15 for receiving the frame profile, preferably a non-circular frame profile. The slot member 132 therefore comprises a female coupling groove 134, which is designed to couple to the male coupling ridge 113 of the tab member 112 of the first portion 11 by geometrical locking. The slot member 132 of the third portion 13 also comprises a hole 16, which is coaxial and dimensionally matching to that of the tab member 133 for receiving the common hinge pin 30.

When the second portion 12 is shaped to an enfolding position to provide a cavity 15 for receiving the frame profile and the tab and slot members 112, 113, 132, 133 of the first and third portions 11, 13 have cooperated such that the holes 16 are aligned, the hinge module 10 assumes the configuration of Fig. 20. In this configuration, the mechanical couplings 115, 135 and 114, 134 secure the first and third portions 11, 13 to each other by geometrical locking for aiding the installation of the module 10 around the frame profile. The coupling may also be provided with alternative means. For example, the cooperating members of the first and third portions could be provided with engaging conical surfaces, which provide enough friction for establishing coupling between the components. Alternatively external means, such as adhesive, can be used.

The embodiment described above represents a particularly advantageous example of the invention. Basically a hinge module 10 could also be provided such that the first and third portions 11, 13 were provided with mere loops (not shown), which would define corresponding holes 16. Upon shaping the second portion 12 to the enfolding position, the loops would align, whereby a common hinge pin 30 could be inserted through said loops. This would, however, not be particularly user-friendly way of carrying out the invention as installation of the module 10 would not benefit from the above-described mechanical coupling.

Generally speaking, the first and third portions 11, 13 preferably comprise interlocking forms 117, 132 for locking the module 10 around a frame profile, preferably a non-circular frame profile.

In contrast, a hinge module 10 of the embodiment of Figs. 18 to 20 can be easily locked around a frame profile. A similar module can also be easily locked around an adjacent frame profile in inverted orientation such that the holes 16 the modules are aligned, wherein a hinge assembly 20 is provided. A hinge is completed when a common hinge pin 30 is inserted through the sequential and holes 16. The hinge pin 30 is preferably provided with sealing means such as a deformable terminal end (not shown) or a transversal locking pin (not shown).

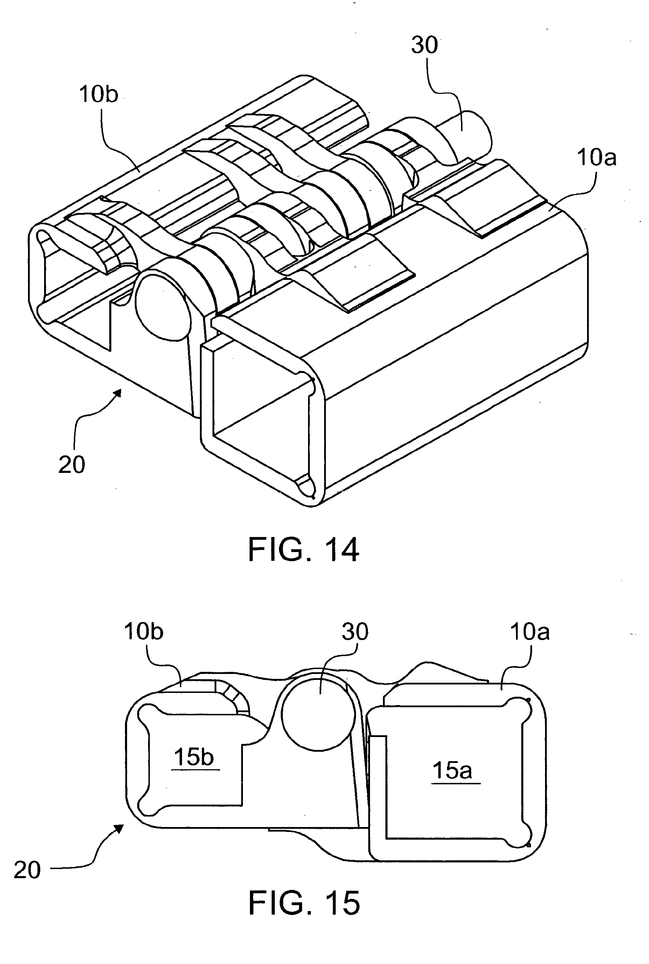

As illustrated in Fig. 14, the module 10 is therefore shaped such that another module 10 can be arranged along the same hinge pin 30 to create a hinge. According to the embodiment of Figs. 14 to 17, the hinge module 10 is shaped such that a first module 10a and a corresponding inverted second module 10b can be arranged to pivot about the same hinge pin 30. As is most apparent from Fig. 15, the hinge module 10 is advantageously shaped such that the parts cooperating with another inverted module 10 or with a common hinge pin 30 are of standardized shape, whereby other parts can be dimensioned to receive a specific frame profile. For example in Fig. 15, the first hinge module 10a is designed to receive a quadratic frame profile of 22 x 22 mm and the second hinge module 10b is designed to receive a quadratic frame profile of 15 x 15 mm. The cooperating parts of these two modules 10a, 10b are discussed in the following.

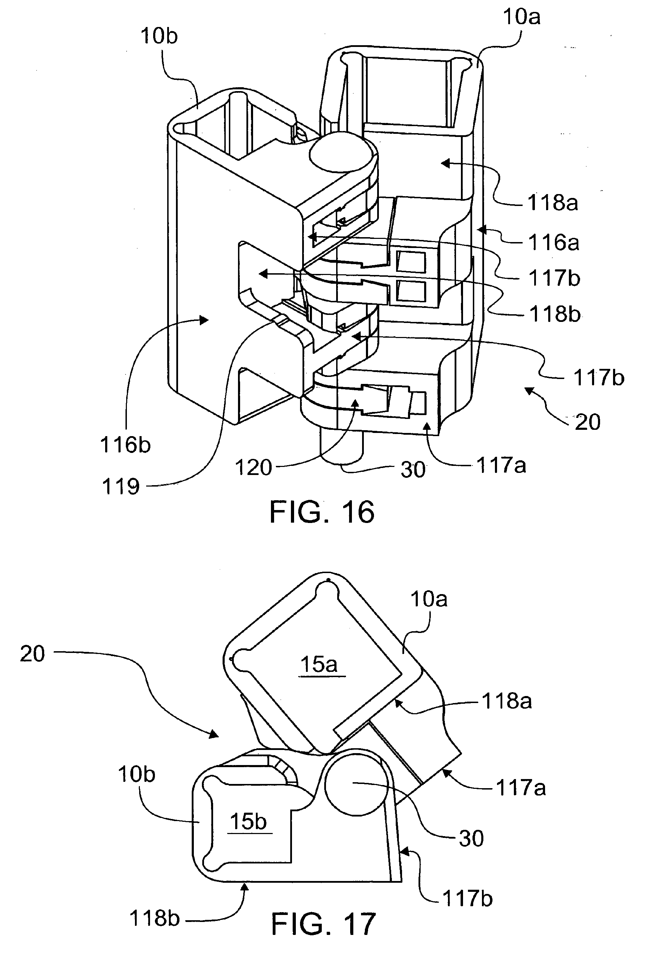

Referring to Figs. 16 and 18, the first portion 11 of the hinge module 10 is designed such that the outer surface 117 of its protruding parts, i.e. of tab member 112 and slot member 113, are adapted to cooperate with the outer surface 118 of the enfolding portion 111 of an inverted another hinge module 10 arranged such that the holes 16 of said modules are aligned. In other words, when two mutually inverted modules 10a, 10b are aligned by their holes 16, the outer surface 117a of the first hinge module 10a is adapted to engage with the outer surface 118b of the enfolding portion 111 of the second hinge module 10b. Once in this configuration, the frame profiles arranged in the cavities 15a, 15b of modules 10a, 10b, respectively, are coaxial with each other as well as with the hinge pin 30 (Fig. 17). Furthermore, the engaging surfaces 117a, 118a provide a travel stop for the hinge assembly 20, whereby hinge may not be articulated beyond a certain angle. This is particularly advantageous, when a hinge assembly 20 is used to hinge two rear wall sections 220, 230 to each other preventing them from protruding towards the outside of the roll container 200 (Fig. 5).

The *outer surface* of said components of the module is in this context to be understood as the terminal surface of a component, such as tab portion 112, 133 or second portion 12, of that module (Figs. 12 and 13).

As illustrated in Figs. 10, 13 and 16, the hinge module 10 is according to one embodiment a coupling element 119 adapted to couple two cooperating modules 10 to each other. The coupling element 119 is preferably a small bulge protruding in parallel to the hole 16 from the tab member 112 of the first portion 11. The coupling element 119 is therefore adapted to engage with a protruding member, such as the tab or slot member, of a cooperating other hinge module 10 (see Fig. 16). The coupling function may be established by geometrical locking or by, e.g., conical friction surfaces.

In the above described embodiments the hinge module 10 is used to pivot adjacent wall sections to each other. Referring back to Fig. 3, the module 10 may also be used to provide a hinge assembly 20 for pivoting other elements of a roll container 200 to each other. For example, a hinge assembly 20 may be provided between a wall section 210 and a floor section 250 or between a wall section 210 and a shelf (not shown). The module 10 according to the invention may therefore be provided to a roll container 200 to pivotally connect any sections thereof having a frame profile.

**Table 1: List of reference numbers.**

| **Number** | **Part** | **Number** | **Part** |
|---|---|---|---|
| 10 | hinge module | 119 | coupling element |
| 10a | first hinge module | 120 | surface |
| 10b | second hinge module | 132 | slot member |
| 11 | first portion | 133 | tab member |
| 12 | second portion | 134 | female coupling groove |
| 13 | third portion | 135 | male coupling ridge |
| 14 | form fit | 200 | roll container |
| 15 | frame profile cavity | 210 | first side wall |
| 16 | hinge pin hole | 211 | first side wall frame profile |
| 20 | hinge assembly | 220 | first rear wall section |
| 30 | hinge pin | 221 | first rear wall section frame profile |
| 111 | enfolding portion | 230 | second rear wall section |
| 112 | tab member | 231 | second rear wall section frame profile |
| 113 | slot member | 240 | second side wall |
| 114 | male coupling ridge | 241 | second side wall frame profile |
| 115 | female coupling ridge | 250 | floor section |
| 116 | surface | 301 | first bushing |
| 117 | surface | 302 | second bushing |
| 118 | surface | | |

## Claims

1. Hinge module (10) for pivoting roll container wall sections having a frame profile, the module (10) comprising:
- a first portion (11) having a hole (16) for receiving a hinge pin (30),
- a sheet-like second portion (12) connected to the first portion (11) and being made of elastic material capable of being wrapped around the frame profile such to be shaped to an enfolding configuration to provide a cavity (15) for receiving a frame profile, and
- a third portion (13) connected to the second portion (12) to an end thereof opposing the first portion (11) and having a corresponding hole (16) for receiving a hinge pin (30) as that of the first portion (11),
wherein the first and third portion (11, 13) are adapted to cooperate such that, when the second portion (12) is shaped to provide the cavity (15), the holes (16) of the first and third portion (11, 13) are aligned in parallel to the cavity (15) for receiving the hinge pin (30), and wherein the module (10) is shaped such that holes (16) of the first and third portion of another module (10), which is arranged in an inverted orientation to the first one, are aligned with those of the first module (10), wherein said another module (10) can be arranged along the same hinge pin (30).

2. Hinge module (10) according to claim 1, wherein the module (10) is single piece, which is formable to enfold a frame profile.

3. Hinge module (10) according to claim 2, wherein the first and third portion (11, 13) comprise interlocking forms (117, 132) for locking the module (10) around the frame profile.

4. Hinge module (10) according to any of the preceding claims, wherein the hinge module (10) is shaped such that a first module (10a) and a corresponding inverted second module (10b) are adaptable to cooperate for pivoting about the same hinge pin (30).

5. Hinge module (10) according to claim 4, wherein the outer surface (117) of protruding parts (112, 113) of the first portion (11) of the first hinge module (10a) are adapted to cooperate with the outer first portion (11) of an inverted another hinge module (10b) arranged such that the holes 16 of said modules are aligned.

6. Hinge module (10) according to claim 4 or 5, wherein the engaging surfaces (117a, 118a) of the first portions (11) of the cooperating modules (10a, 10b) are adapted to provide a travel stop, whereby the modules (10a, 10b) may not be articulated beyond an angle.

7. Hinge module (10) according to any of the preceding claims, wherein the second portion (12) is made of polymer.

8. Hinge module (10) according to any of the preceding claims, wherein the frame profile is non-circular.

9. Hinge assembly (20) for pivoting roll container wall sections having a frame profile, **characterized in that** the hinge assembly (20) comprises at least two invertedly arranged cooperating hinge modules (10a, 10b) according to claim 1.

10. Hinge assembly (20) of claim 9, wherein the hinge modules (10a, 10b) are dimensioned to receive mutually different frame profiles, whereby the modules (10a, 10b) are suitable for pivoting wall sections having different frame profiles to each other.

11. Hinge assembly (20) of claim 9 or 10, wherein the hinge module (10a) is shaped such that the parts cooperating with another inverted module (10b) or with a common hinge pin (30) are of standardized shape, whereby other parts can be dimensioned to receive a specific frame profile.

12. Hinge assembly (20) of claim 9, 10 or 11, wherein the frame profile is non-circular.

13. Roll container (200) comprising:
- at least two adjacent sections (210, 220) having a frame profile,
- hinges adapted to pivotally connect sections (210, 220),
**characterized in that** the hinges are provided by hinge assemblies (20) of claim 9 connected by a hinge pin (30) penetrating the aligned holes (16) of the modules (10) thereof.

## Patentansprüche

1. Gelenkmodul (10) zum Schwenken von Rollcontainer-Wandabschnitten, welche ein Rahmenprofil haben, wobei das Modul (10) aufweist:
- einen ersten Abschnitt (11) mit einem Loch (16) zum Aufnehmen eines Gelenkzapfens (30),
- einen blattartigen, zweiten Abschnitt (12), welcher mit dem ersten Abschnitt (11) verbunden ist und welcher aus elastischem Material gemacht ist, imstande, um um das Rahmenprofil herum geschlagen zu werden, um zu einer Umfassungskonfiguration geformt zu werden, um eine Kavität (15) zum Aufnehmen eines Rahmenprofils bereitzustellen, und
- einen dritten Abschnitt (13), der mit dem zweiten Abschnitt (12) an einem Ende dessen verbunden ist, welches zu dem ersten Abschnitt (11) entgegengesetzt ist, und der ein korrespondierendes Loch (16) zum Aufnehmen eines Gelenkzapfens (30) hat wie jenes des ersten Abschnitts (11),
wobei der erste und der dritte Abschnitt (11, 13) angepasst sind, um derart zusammenzuwirken, dass, wenn der zweite Abschnitt (12) geformt ist, um die Kavität (15) bereitzustellen, die Löcher (16) des ersten und des dritten Abschnitts (11, 13) parallel zu der Kavität (15) ausgerichtet sind zum Aufnehmen des Gelenkzapfens (30), und wobei das Modul (10) geformt ist, sodass die Löcher (16) des ersten und des dritten Abschnitts eines anderen Moduls (10), welches in einer umgekehrten Orientierung zu dem ersten angeordnet ist, zu jenen des ersten Moduls (10) fluchtend sind, wobei das andere Modul (10) entlang desselben Gelenkzapfens (30) angeordnet werden kann.

2. Gelenkmodul (10) gemäß Anspruch 1, wobei das Modul (10) ein Einzelteil ist, welches formbar ist, um ein Rahmenprofil zu umfassen.

3. Gelenkmodul (10) gemäß Anspruch 2, wobei der erste und der dritte Abschnitt (11, 13) Verriegelungsformen (117, 132) aufweisen zum Verriegeln des Moduls (10) um das Rahmenprofil herum.

4. Gelenkmodul (10) gemäß irgendeinem der vorhergehenden Ansprüche, wobei das Gelenkmodul (10) derart geformt ist, dass ein erstes Modul (10a) und ein korrespondierendes umgekehrtes zweites Modul (10b) anpassbar sind, um zum Schwenken um den gleichen Gelenkzapfen (30) zusammenzuwirken.

5. Gelenkmodul (10) gemäß Anspruch 4, wobei die Außenfläche (117) der vorstehenden Teile (112, 113) des ersten Abschnitts (11) des ersten Gelenkmoduls (10a) angepasst sind, um mit dem äußeren, ersten Abschnitt (11) eines umgekehrten anderen Gelenkmoduls (10b) zusammenzuwirken, welches derart angeordnet ist, dass die Löcher 16 der Module fluchtend sind.

6. Gelenkmodul (10) gemäß Anspruch 4 oder 5, wobei die Eingriffsflächen (117a, 118a) der ersten Abschnitte (11) der zusammenwirkenden Module (10a, 10b) angepasst sind, um einen Bewegungsstopp bereitzustellen, wodurch die Module (10a, 10b) nicht über einen Winkel hinausgehend gelenkbewegt werden können.

7. Gelenkmodul (10) gemäß irgendeinem der vorhergehenden Ansprüche, wobei der zweite Abschnitt (12) aus Polymer herstellt ist.

8. Gelenkmodul (10) gemäß irgendeinem der vorhergehenden Ansprüche, wobei das Rahmenprofil nicht kreisförmig ist.

9. Gelenkeinrichtung (20) zum Schwenken von Rollcontainer-Wandabschnitten, welche ein Rahmenprofil haben, **dadurch gekennzeichnet, dass** die Gelenkeinrichtung (20) wenigstens zwei umgekehrt angeordnete zusammenwirkende Gelenkmodule (10a, 10b) gemäß Anspruch 1 aufweist.

10. Gelenkeinrichtung (20) gemäß Anspruch 9, wobei die Gelenkmodule (10a, 10b) dimensioniert sind, um zueinander verschiedene Rahmenprofile aufzunehmen, wodurch die Module (10a, 10b) geeignet sind zum Schwenken von Wandabschnitten, welche zueinander verschiedene Rahmenprofile haben.

11. Gelenkeinrichtung (20) gemäß Anspruch 9 oder 10, wobei das Gelenkmodul (10a) derart geformt ist, dass die Teile, die mit einem anderen, umgekehrten Modul (10b) oder mit einem gemeinsamen Zapfen (30) zusammenwirken von Standardform sind, wodurch andere Teile dimensioniert werden können, um ein spezifisches Rahmenprofil aufzunehmen.

12. Gelenkeinrichtung (20) gemäß Anspruch 9, 10 oder 11, wobei das Rahmenprofil nicht kreisförmig ist.

13. Rollcontainer (200) mit:
- wenigstens zwei benachbarten Abschnitten (210, 220), die ein Rahmenprofil haben,
- Gelenke, die angepasst sind, um die Abschnitte (210, 220) schwenkbar zu verbinden,
**dadurch gekennzeichnet, dass** die Gelenke durch Gelenkeinrichtungen (20) gemäß Anspruch 9 gebildet sind, welche durch einen Gelenkzapfen (30) verbunden sind, der die fluchtenden Löcher (16) der Module (10) davon durchdringt.

## Revendications

1. Module à charnière (10) permettant de faire pivoter des sections de paroi de contenant à roulettes ayant un profilé de châssis, le module (10) comprenant :
- une première portion (11) ayant un orifice (16) permettant de recevoir une broche de charnière (30),
- une deuxième portion de type feuille (12) raccordée à la première portion (11) et réalisée en matériau élastique pouvant être enroulée autour du profilé de châssis de façon à être mise en forme en configuration d'enveloppement afin de fournir une cavité (15) permettant de recevoir un profilé de châssis, et
- une troisième portion (13) raccordée à la deuxième portion (12) à une extrémité de celle-ci opposée à la première portion (11) et ayant un orifice correspondant (16) permettant de recevoir une broche de charnière (30) comme celle de la première portion (11),
dans lequel les première et troisième portions (11, 13) sont adaptées pour coopérer de sorte que, lorsque la deuxième portion (12) est mise en forme pour fournir la cavité (15), les orifices (16) des première et troisième portions (11, 13) sont alignés en parallèle à la cavité (15) permettant de recevoir la broche de charnière (30), et dans lequel le module (10) est mis en forme de sorte que des orifices (16) des première et troisième portions d'un autre module (10), qui est agencé en orientation inversé par rapport au premier, soient alignés avec ceux du premier module (10), dans lequel ledit autre module (10) peut être agencé le long de la même broche de charnière (30).

2. Module à charnière (10) selon la revendication 1, dans lequel le module (10) est monobloc, qui est formable pour envelopper un profilé de châssis.

3. Module à charnière (10) selon la revendication 2, dans lequel les première et troisième portions (11, 13) comprennent des formes d'interverrouillage (117, 132) permettant de verrouiller le module (10) autour du profilé de châssis.

4. Module à charnière (10) selon l'une quelconque des revendications précédentes, dans lequel le module à charnière (10) est mis en forme de sorte qu'un premier module (10a) et un second module inversé correspondant (10b) soient adaptables pour coopérer afin de pivoter autour de la même broche à charnière (30) .

5. Module à charnière (10) selon la revendication 4, dans lequel la surface externe (117) de parties protubérantes (112, 113) de la première portion (11) du premier module à charnière (10a) est adaptée pour coopérer avec la première portion externe (11) d'un autre module à charnière inversé (10b) agencé de sorte que les orifices (16) desdits modules soient alignés.

6. Module à charnière (10) selon la revendication 4 ou 5, dans lequel les surfaces d'enclenchement (117a, 118a) des premières portions (11) des modules coopérants (10a, 10b) sont adaptées pour former une butée de déplacement, moyennant quoi les modules (10a, 10b) ne peuvent pas être articulés au-delà d'un angle.

7. Module à charnière (10) selon l'une quelconque des revendications précédentes, dans lequel la deuxième portion (12) est réalisée en polymère.

8. Module à charnière (10) selon l'une quelconque des revendications précédentes, dans lequel le profilé de châssis est non circulaire.

9. Ensemble de charnières (20) permettant de faire pivoter des sections de paroi de contenant à roulettes ayant un profilé de châssis, **caractérisé en ce que** l'ensemble de charnières (20) comprend au moins deux modules à charnière coopérants agencés de façon inversée (10a, 10b) selon la revendication 1.

10. Ensemble de charnières (20) selon la revendication 9, dans lequel les modules à charnière (10a, 10b) sont dimensionnés pour recevoir des profilés de châssis mutuellement différents, moyennant quoi les modules (10a, 10b) sont appropriés pour faire pivoter des sections de paroi ayant des profilés de châssis différents des uns des autres.

11. Ensemble de charnières (20) selon la revendication 9 ou 10, dans lequel le module à charnière (10a) est mis en forme de sorte que les parties coopérant avec un autre module inversé (10b) ou avec une broche de charnière commune (30) soient de forme normalisée, moyennant quoi d'autres parties peuvent être dimensionnées pour recevoir un profilé de châssis spécifique.

12. Ensemble de charnières (20) selon la revendication 9, 10 ou 11, dans lequel le profilé de châssis est non circulaire.

13. Contenant à roulettes (200) comprenant :
- au moins deux sections adjacentes (210, 220) ayant un profilé de châssis,
- des charnières adaptées pour raccorder en pivotement des sections (210, 220),
**caractérisé en ce que** les charnières sont fournies par des ensembles de charnières (20) de la revendication 9 raccordés par une broche de charnière (30) pénétrant les orifices alignés (16) des modules (10) de ceux-ci.
